# EUROPÄISCHE PATENTSCHRIFT

(11) **EP 1 434 649 B1**
(45) Veröffentlichungstag und Bekanntmachung des Hinweises auf die Patenterteilung: **10.08.2005**
(21) Anmeldenummer: 02774597.5
(22) Anmeldetag: 11.09.2002
(51) Int. Cl.: B01J 2/16

(54) **VERFAHREN UND VORRICHTUNG ZUM BEHANDELN PARTIKELFÖRMIGEN GUTS**
METHOD AND DEVICE FOR TREATING A PARTICULATE MATERIAL
PROCEDE ET DISPOSITIF POUR LE TRAITEMENT D'UN MATERIAU PARTICULAIRE

(30) Priorität: 02.10.2001 DE 10149764
(43) Veröffentlichungstag der Anmeldung: 07.07.2004
(73) Patentinhaber: Hüttlin, Herbert, Dr. h.c., 79539 Lörrach (DE)
(72) Erfinder: Hüttlin, Herbert, Dr. h.c., 79539 Lörrach (DE)
(74) Vertreter: Heuckeroth, Volker, Dr.
(86) Internationale Anmeldenummer: PCT/EP2002/010175
(87) Internationale Veröffentlichungsnummer: WO 2003/031046

(56) Entgegenhaltungen:
- DE-A- 4 006 935
- DE-C- 872 928
- US-A- 4 858 552

## Beschreibung

Die Erfindung betrifft ein Verfahren zum Behandeln partikelförmigen Guts, insbesondere zum Mischen, Trocknen, Granulieren, Pelletieren und/oder Coaten des Guts, bei dem das Gut in einen Behälter gefüllt wird, der eine um eine Längsmittelachse des Behälters herum angeordnete, als Ringraum ausgebildete Prozeßkammer aufweist, und bei dem Prozeßluft von einem von der Prozeßkammer getrennten behältermittleren Kanal aus in einen unteren Bereich der Prozeßkammer eingeleitet wird und in der Prozeßkammer nach oben strömt, um das Gut in der Prozeßkammer zu bewegen, wobei die Prozeßluft aus der Prozeßkammer aus deren oberen Bereich wieder austritt.

Die Erfindung betrifft ferner eine Vorrichtung zur Durchführung des vorgenannten Verfahrens.

Eine Vorrichtung und ein Verfahren der zuvor genannten Art sind aus der EP-A-0 103 894 bekannt.

Beim Granulieren werden die Partikel des Guts, ausgehend von einem pulvrigen Zustand, durch Anfeuchten innerhalb der Prozeßkammer zu größeren Partikeln agglomeriert.

Beim Pelletieren wird das Gut ebenfalls von einem pulvrigen Zustand ausgehend durch Anfeuchten des Guts zu größeren Teilchen agglomeriert, die jedoch im Unterschied zu Granulaten eine sphärische Form aufweisen.

Beim Coaten werden Partikel, bspw. zuvor hergestellte Granulate oder Pellets, mit einem Überzug versehen, bspw. lackiert. Das Coaten kann sich insbesondere an einen Granulier- oder Pelletiervorgang anschließen.

Bei der aus der eingangs genannten EP-A-0 103 894 genannten Vorrichtung (das gleiche gilt für eine Vorrichtung, die aus DE-A-40 06 935 bekannt ist), ist der behältermittlere Kanal als Tauchrohr ausgebildet, das von oben in den Behälter zentral eintaucht, und durch das von oben nach unten Prozeßluft geleitet wird, die aus der unteren Öffnung des behältermittleren Kanals in die Prozeßkammer eingeleitet wird, und in der Prozeßkammer nach oben strömt, und aus dem oberen Bereich der Prozeßkammer entweicht, von wo sie dann aus dem Behälter nach außen abgeführt wird. Die Prozeßluft zum Bewegen des Guts wird ständig von einem externen Prozeßluftzufuhrsystem, das auch als Air-Handlingsystem bezeichnet wird, nachgeführt. Diese Art der Prozeßluftführung führt zu folgenden Nachteilen.

Zu Beginn der Behandlung des partikelförmigen Guts liegt dieses zumeist in pulvrigem Zustand vor. Beim Granulieren oder Pelletieren wird das pulvrige partikelförmige Gut in der Prozeßkammer angefeuchtet. Da das Anfeuchten jedoch nicht das gesamte Gut zeitgleich erfassen kann, bildet sich in dem partikelförmigen Gut ein Gemisch aus leichten pulvrigen Partikeln und schwereren feuchten und teilweise bereits agglomerierten Partikeln. Bei der bekannten Vorrichtung und dem bekannten Verfahren besteht nun der Nachteil darin, daß der noch pulvrige Anteil des Guts aufgrund der in der Prozeßkammer herrschenden nach oben gerichteten Prozeßluftströmung beim Entweichen der Prozeßluft aus der Prozeßkammer von dieser mitgerissen wird und somit dem Prozeß entzogen wird, und sich bspw. an einem Abluftfilter ansammelt. Eine vollständige Rückführung des noch pulvrigen Anteils in den unteren Bereich der Prozeßkammer, d. h. in das Unterbett, ist bei dieser bekannten Vorrichtung und dem bekannten Verfahren nicht gewährleistet.

Eine mit dieser bekannten Vorrichtung und dem bekannten Verfahren vergleichbare Vorrichtung bzw. ein vergleichbares Verfahren sind aus der EP-A-0 212 397 bekannt, bei dem die zuvor erwähnten Nachteile ebenfalls fortbestehen. Auch bei dieser Vorrichtung und diesem Verfahren ist nicht gewährleistet, daß der noch windsichtige, pulvrige Anteil des partikelförmigen Guts, der dem Behandlungsprozeß entzogen wurde, diesem wieder vollständig zugeführt wird.

Des weiteren sind aus der EP-A-0 370 167 eine mit den zuvor genannten Vorrichtungen und den zuvor genannten Verfahren vergleichbare Vorrichtung und ein vergleichbares Verfahren bekannt, das sich von den zuvor beschriebenen Vorrichtungen und Verfahren dadurch unterscheidet, daß die Prozeßluft nach dem Austreten aus dem unteren Bereich des behältermittleren Kanals vor dem Eintreten in die Prozeßkammer durch einen Kranz aus Leitplatten geleitet wird, die in Richtung der Behälterachse betrachtet einander überlappen und dem aufwärts gerichteten Luftstrom einen Drall erteilen. Aber auch bei dieser bekannten Vorrichtung und diesem bekannten Verfahren ist keine Maßnahme getroffen, um sicher zu verhindern, daß der noch windsichtige Anteil des partikelförmigen Guts dem Behandlungsprozeß entzogen wird.

In der DE-PS 872 928 ist eine Vorrichtung zum Umschichten, Auflockern und/oder Mischen von Schüttgut in Silos und dgl. beschrieben. Diese bekannte Vorrichtung weist ein in einen Behälter eintauchendes Rohr auf, durch das Prozeßluft in das Behälterunterteil geleitet und durch einen schmalen zylindrischen Ringraum um das Rohr herum wieder nach oben geleitet wird. In dem Ringraum wird das zu mischende Gut nach oben bewegt, tritt oben aus und fällt unter der Wirkung der Schwerkraft wieder in den unteren Bereich des Behälters zurück. Im unteren Bereich des Behälters bildet sich nachteiligerweise ein dichtes Kernbett aus, in dem das Gut mehr oder weniger nicht bewegt wird.

Schließlich ist aus dem deutschen Gebrauchsmuster DE-GM 1 849 891 ein Behälter zum Mischen von Staubgut bekannt, in dem mehrere senkrechte, verschieden lange, an einem Abscheider angeschlossene zylindrische Gut-Absaugrohre und ein senkrechtes zentrales Rohr zur Luftrückführung vom Abscheider aus angeordnet sind, wobei das Luftrückführrohr in verschiedener, den Absaugöffnungen der Absaugrohre entsprechender Höhe Luftaustrittsöffnungen aufweist. Die in verschiedener Höhe angebrachten Austrittsöffnungen des Druckrohres korrespondieren mit den Einlässen der verschiedenen senkrechten Saugrohre. Dadurch sollen an verschiedenen Stellen im Mischbehälter Querströmungen entstehen, deren Wirksamkeit durch Einführen von Auflockerungsluft am Boden des Behälters gesteigert werden kann. Das zu mischende Gut wird an verschiedenen Punkten des Behälters abgesaugt, und die Rückführung von Gut und Luft in den Behälter erfolgt getrennt an verschiedenen Stellen im Abstand voneinander. Auch mit einer derartigen Vorrichtung ist eine fluidisierende Bewegung des partikelförmigen Guts nicht erreichbar.

Der Erfindung liegt die Aufgabe zugrunde, ein Verfahren und eine Vorrichtung der eingangs genannten Art dahingehend weiterzubilden, daß möglichst gewährleistet ist, daß das gesamte in den Behälter gefüllte partikelförmige Gut am Behandlungsprozeß teilnimmt.

Hinsichtlich des eingangs genannten Verfahrens wird diese Aufgabe erfindungsgemäß dadurch gelöst, daß die Prozeßluft zumindest in einer ersten Behandlungsphase nach dem Austreten aus dem oberen Bereich der Prozeßkammer in fortgesetzter kreislaufartiger Strömung zumindest teilweise in den behältermittleren Kanal geleitet und dort wieder nach unten geführt wird, wo sie erneut in die Prozeßkammer eingeleitet wird.

Hinsichtlich der eingangs genannten Vorrichtung wird diese Aufgabe erfindungsgemäß dadurch gelöst, daß im unteren Bereich des behältermittleren Kanals, dem Mündungsbereich in die Prozeßkammer unmittelbar benachbart, ein Ventilator angeordnet ist.

In einer bevorzugten Ausgestaltung der Vorrichtung kommuniziert in zumindest einem ersten Betriebszustand der obere offene Bereich der Prozeßkammer mit dem behältermittleren Kanal prozeßluftleitend, indem der behältermittlere Kanal sich umfänglich zum oberen Bereich der Prozeßkammer erweiternd und zur Prozeßkammer öffnend ausgebildet ist.

Bei dem erfindungsgemäßen Verfahren und der erfindungsgemäßen Vorrichtung wird demnach nicht mehr wie bei den bekannten Verfahren und den bekannten Vorrichtungen die Prozeßluft, die aus dem oberen Bereich der Prozeßkammer austritt, aus dem Behälter abgeführt, sondern wieder in den behältermittleren Kanal eingeleitet, der sich dazu zum oberen Bereich der Prozeßkammer hin erweiternd zur Prozeßkammer hin öffnet. Nach Durchströmen des behältermittleren Kanals wird die Prozeßluft wieder in den unteren Bereich der Prozeßkammer eingeleitet. Dies hat die Wirkung, daß der noch windsichtige Anteil des partikelförmigen Guts von der aus dem oberen Bereich der Prozeßkammer austretenen Prozeßluft in den behältermittleren Kanal mitgenommen und mit dieser im unteren Mündungsbereich des behältermittleren Kanals in dem unteren Bereich der Prozeßkammer wieder der Prozeßkammer und damit dem Prozeß zugeführt wird. Dabei erfolgt in besonders vorteilhafter Weise die Rückführung des noch windsichtigen Anteils des partikelförmigen Guts in das Unterbett der Prozeßkammer, so daß gewährleistet ist, daß das rückgeführte partikelförmige Gut am vollständigen Prozeß innerhalb der Prozeßkammer teilnimmt. Insbesondere beim Granulieren oder Pelletieren, bei dem das partikelförmig Gut in der Prozeßkammer mit einem feuchten Medium beaufschlagt wird, wird somit vorteilhafter weise gewährleistet, daß das gesamte partikelförmige Gut mit dem feuchten Medium beaufschlagt werden kann. Die erste Behandlungsphase kann so lange andauern, bis das gesamte partikelförmige Gut angefeuchtet ist. Mit zunehmender Prozeßdauer nimmt der windsichtige Anteil des partikelförmigen Guts, d. h. der pulvrige Anteil, ab, bis das gesamte partikelförmige Gut angefeuchtet ist, das dann mittels der Prozeßluft nur noch innerhalb der Prozeßkammer bewegt wird, bspw. in einer fluidisierten zirkulierenden Bewegung.

In einer bevorzugten Ausgestaltung des Verfahrens wird die Strömung der Prozeßluft im unteren Bereich des behältermittleren Kanals, dem Mündungsbereich in die Prozeßkammer unmittelbar benachbart, erzeugt, so daß im behältermittleren Kanal ein nach unten gerichteter Saugdruck ansteht.

Bei dieser Ausgestaltung des Verfahrens und der Vorrichtung besteht der Vorteil darin, daß aufgrund des mittels des Ventilators im behältermittleren Kanal erzeugten Saugdruckes eine besonders wirksame Zwangsführung der Prozeßluft und damit des windsichtigen Anteils des partikelförmigen Guts durch den behältermittleren Kanal in das Unterbett der Prozeßkammer erreicht wird. Durch die Erzeugung der Prozeßluftströmung im Behälter selbst bzw. durch die Anordnung des Ventilators im Behälterinneren wird des weiteren die vorteilhafte Möglichkeit eröffnet, die Prozeßluftströmung zur Bewegung des Guts in der Prozeßkammer unabhängig von einem externen Prozeßluftzufuhrsystem bzw. Air-Handlingsystem zu realisieren. Bei den eingangs genannten bekannten Vorrichtungen waren Prozeßluftgebläse bzw. Ventilatoren ausschließlich außerhalb der Vorrichtung vorgesehen, was den Nachteil hatte, daß die üblicherweise in Form von Monoblock-Einheiten ausgestalteten Air-Handlingsysteme so stabil ausgeführt werden mußten, daß sie den relativ hohen, statischen Prozeß-Drücken von 2500 bis 10000 Pa standhalten konnten. Dieser Nachteil wird durch die zuvor genannte Ausgestaltung vermieden, da die zum Bewegen des partikelförmigen Guts erforderliche Prozeßluftströmung mit den erforderlichen hohen Drücken durch den im behälterinneren integrierten Ventilator erzeugt wird. Es versteht sich, daß bei der erfindungsgemäßen Vorrichtung zusätzlich ein externes Air-Handlingsystem zur Zuführung von Prozeßluft, bspw. mit bloßer Trocknungsfunktion, vorgesehen sein kann, was jedoch dann nicht mehr den hohen Stabilitätsanforderungen genügen muß, sondern in einer den normalen klimatechnischen Anlagen für Zuluft und Abluft entsprechen kann, wodurch erhebliche Kosten eingespart werden können.

Die Erzeugung der Prozeßluftströmung mittels des im unteren Bereich des behältermittleren Kanals angeordneten Ventilators hat des weiteren den Vorteil, daß die Prozeßluft mit dem erforderlichen Druck umfänglich gleichmäßig in das Unterbett des zu bewegenden partikelförmigen Guts eingeleitet wird.

Der Ventilator im unteren Bereich des Behälters hat den weiteren Vorteil, daß er eine Reinigung des Behälterinneren, zumindest der Prozeßkammer, ermöglicht. Dazu kann der Behälter nach Beendigung des Verfahrens mit Waschflüssigkeit gefüllt werden, und durch in Bewegung setzen des Ventilators wird die Waschflüssigkeit mit hohem Reinigungseffekt in dem Behälter bewegt. Der Ventilator im unteren Bereich des Behälters ermöglicht somit vorteilhafterweise ein Washing-in-place.

In einer weiteren bevorzugten Ausgestaltung des Verfahrens wird die Prozeßluft in die Prozeßkammer mit einem zentrifugalen und tangentialen Drall eingeleitet.

Bei der Vorrichtung ist dazu bevorzugt vorgesehen, daß der Ventilator sich im wesentlichen radial und vertikal erstreckende Ventilatorflügel aufweist, deren radial äußere Enden im wesentlichen formgerecht zumindest teilweise in den Mündungsbereich zwischen dem behältermittleren Kanal und der Prozeßkammer ragen.

Hierbei ist von Vorteil, daß das über den behältermittleren Kanal in die Prozeßkammer zurückgeführte Gut, das dabei an den Ventilatorflügeln vorbeiläuft, eine drallartige zentrifugale und tangentiale Bewegungskomponente erhält. Dadurch wird ein optimaler Vermischungsgrad des zu behandelnden Gutes bewirkt. Beim Pelletieren wird zusätzlich der Vorteil erzielt, daß das Sphäronisieren der agglomerierten Partikel verbessert wird.

In einer weiteren bevorzugten Ausgestaltung der Vorrichtung sind die radial äußeren Enden der Ventilatorflügel in Drehrichtung des Ventilators gesehen rückwärts gekrümmt.

Diese Maßnahme hat den Vorteil, daß der Prozeßluft und dem in die Prozeßkammer zurückgeführten Gut eine ausgeprägte tangentiale Bewegungskomponente verliehen wird.

In einer weiteren bevorzugten Ausgestaltung der Vorrichtung erstrecken sich die Ventilatorflügel radial unterschiedlich weit.

Diese Maßnahme trägt vorteilhaft zu einer weiter verbesserten Mischung des Guts beim Eintritt in die Prozeßkammer bei.

In einer weiteren bevorzugten Ausgestaltung des Verfahrens wird die Prozeßluft in der ersten Behandlungsphase in dem Behälter als im wesentlichen geschlossenes Kreislaufsystem umgewälzt.

Hierbei ist von Vorteil, daß in der ersten Behandlungsphase sichergestellt wird, daß das gesamte Gut im Sinne der zuvor erwähnten Unterbettzuführung dem Prozeß zugeführt und nicht entzogen wird.

In einer weiteren bevorzugten Ausgestaltung des Verfahrens wird in zumindest einer zweiten Behandlungsphase zusätzlich Prozeßluft von außerhalb des Behälters in den behältermittleren Kanal zugeführt und in den unteren Bereich der Prozeßkammer eingeleitet.

In einer bevorzugten Ausgestaltung der Vorrichtung ist der Behälter dazu mit einem externen Prozeßluftzufuhrsystem verbunden oder verbindbar und weist einen Zuluftkanal auf, der mit dem behältermittleren Kanal verbunden ist.

Während in der ersten Behandlungsphase, bspw. die Feuchtphase eines Granulier- oder Pelletiervorganges, die Prozeßluft innerhalb des Behälters ausschließlich in einem geschlossenen Kreislauf zirkulieren kann, hat die vorstehend genannte Maßnahme den Vorteil, daß in einer zweiten Behandlungsphase von extern Prozeßluft zugeführt werden kann, die dem Trocknen des feuchten Gutes dient und entsprechend über ein externes Air-Handlingsystem dazu konditioniert sein kann. Die von extern zugeführte Prozeßluft übernimmt dabei vorzugsweise ausschließlich die Funktion einer Trocknung, während die Prozeßluft zum Bewegen des Guts in der Prozeßkammer vorzugsweise ausschließlich durch den Ventilator im unteren Bereich des behältermittleren Kanals erzeugt wird. Dadurch kann das zusätzlich vorgesehene externe Prozeßluftzufuhrsystem sehr kostengünstig und einfach ausgestaltet sein, da es nicht die erforderlichen hohen Drücke, die zur Bewegung des Gutes erforderlich sind, erzeugen muß.

Wenn, wie in der zuvor genannten bevorzugten Ausgestaltung, der Behälter mit einem externen Prozeßluftzufuhrsystem verbunden oder verbindbar ist, ist es bei der Vorrichtung weiterhin bevorzugt, wenn ein Ventil oder Schott vorgesehen ist, um den Zuluftkanal mit dem behältermittleren Kanal prozeßluftleitend zu verbinden oder diesen gegen den Zuluftkanal abzuschließen.

Durch diese Maßnahme kann vorteilhafterweise zwischen externer Prozeßluftzuführung und ausschließlich interner Prozeßluftumwälzung innerhalb des Behälters umgeschaltet werden.

Bei dem erfindungsgemäßen Verfahren ist es weiterhin bevorzugt, wenn in der zweiten Behandlungsphase die aus der Prozeßkammer aus deren oberen Bereich austretende Prozeßluft zumindest teilweise nach außerhalb des Behälters abgeführt wird, ohne über den behältermittleren Kanal in die Prozeßkammer zurückgeführt zu werden.

Bei der Vorrichtung ist dazu bevorzugt vorgesehen, daß das Ventil oder Schott in einem Betriebszustand, in dem der Zuluftkanal mit dem behältermittleren Kanal prozeßluftleitend verbunden ist, den behältermittleren Kanal gegen den oberen offenen Bereich der Prozeßkammer im wesentlichen luftdicht abschließt.

Hierbei ist von Vorteil, daß im Fall, daß von extern Prozeßluft bspw. zum Trocknen des zu behandelnden Guts zugeführt wird, sichergestellt werden kann, daß die die Prozeßluftkammer verlassende feuchte Prozeßluft nach extern abgeführt und getrocknet oder gegen Frischluft ausgetauscht wird, wodurch der Trocknungsvorgang beschleunigt werden kann.

In einer weiteren bevorzugten Ausgestaltung des Verfahrens ist es ebenso bevorzugt, wenn der Übergang zwischen der ersten Behandlungsphase und der zweiten Behandlungsphase fließend durchgeführt wird.

In einer bevorzugten Ausgestaltung der Vorrichtung weist dazu das Ventil oder Schott zumindest eine Betriebsstellung auf, in der sowohl der Zuluftkanal mit dem behältermittleren Kanal als auch der behältermittlere Kanal mit dem oberen offenen Bereich der Prozeßluftkammer prozeßluftleitend verbunden ist.

Hierbei ist von Vorteil, daß die zweite Behandlungsphase, in der von extern Prozeßluft zugeführt wird, bereits eingeleitet werden kann, während noch in der ersten Behandlungsphase die fortgesetzte Unterbettzuführung eines windsichtigen Anteils des zu behandelnden Guts erfolgt. Hierdurch kann, wenn dies gewünscht ist, auch in der ersten Behandlungsphase bereits eine intensive Trocknung des angefeuchteten, bspw. bereits agglomerierten Guts mit zusätzlich zugeführter Prozeßluft erfolgen, während weiterhin sichergestellt wird, daß windsichtiges Gut, das noch vorhanden sein kann, dem Prozeß wieder zugeführt und nicht entzogen wird.

In einer weiteren bevorzugten Ausgestaltung des Verfahrens wird die von extern zugeführte Prozeßluft durch ein oberhalb der Prozeßkammer angeordnetes Filter geleitet.

In einer bevorzugten Ausgestaltung der Vorrichtung ist oberhalb der Prozeßkammer ein Filter angeordnet, das in den Strömungsweg des Zuluftkanals geschaltet ist.

Hierbei ist von Vorteil, daß sich auf der Unterseite des Filters ansammelndes partikelförmiges Gut über die extern zugeführte Prozeßluft abgeblasen und in den behältermittleren Kanal geblasen wird, durch den es dann wiederum in die Prozeßkammer geführt wird, so daß nicht nur in vorteilhafter Weise eine Abreinigung des Filters, sondern gleichzeitig auch eine nahezu vollständige Rückführung des Filtrats in den Prozeß erreicht wird.

In diesem Zusammenhang weist in einer weiteren bevorzugten Ausgestaltung der Vorrichtung der Zuluftkanal einen oberhalb des Filters angeordneten, einen Sektor desselben überspannenden ersten Schuh und einen zweiten, dem ersten Schuh gegenüberliegenden Schuh unterhalb des Filters auf, der mit dem behältermittleren Kanal verbunden ist, wobei der erste und der zweite Schuh in eine Umlaufbewegung auf dem Filter versetzbar sind.

Diese Maßnahme hat den besonderen Vorteil, daß das oberhalb der Prozeßkammer angeordnete und vorzugsweise flachbauende Filter aufgrund der Umlaufbewegung des ersten Schuhs und des zweiten Schuhs entlang seiner gesamten Oberfläche wirksam abgereinigt werden kann, und daß das abgereinigte Filtrat über den zweiten unteren Schuh, der mit dem ersten oberen Schuh zusammen umläuft, und weiter über den behältermittleren Kanal in das Unterbett der Prozeßkammer zurückgeführt wird.

In einer weiteren bevorzugten Ausgestaltung des Verfahrens wird das Gut in der ersten Behandlungsphase mit einem ersten feuchten Medium im unteren Mündungsbereich des behältermittleren Kanals in die Prozeßkammer beaufschlagt.

In einer bevorzugten Ausgestaltung der Vorrichtung ist dazu zumindest eine erste Sprühdüse zum Versprühen eines ersten feuchten Mediums im Bereich der unteren Mündung des behältermittleren Kanals in die Prozeßkammer angeordnet, deren Sprührichtung im wesentlichen in die Prozeßkammer hinein gerichtet ist.

Hierbei ist von Vorteil, daß in der ersten Behandlungsphase, in der insbesondere noch der windsichtige Anteil des Guts über den behältermittleren Kanal wieder in den unteren Bereich der Prozeßkammer zurückgeführt wird, vollständig und gleichmäßig mit dem ersten feuchten Medium beaufschlagt wird. In dieser Ausgestaltung eignet sich die erfindungsgemäße Vorrichtung insbesondere zum Granulieren oder Pelletieren.

In Verbindung mit der bevorzugten Ausgestaltung, wonach im unteren Bereich des behältermittleren Kanals ein Ventilator angeordnet ist, ist es weiterhin bevorzugt, wenn die zumindest eine Sprühdüse zum Versprühen des ersten feuchten Mediums an dem Ventilator angeordnet ist und mit diesem umläuft.

Diese Maßnahme trägt vorteilhafterweise zu einer noch gleichmäßigeren Beaufschlagung des zu behandelnden Gutes mit dem ersten feuchten Medium bei, da das versprühte Medium beim Umlaufen des Ventilators den gesamten Umfang des Behälters erfaßt.

Dabei ist es weiterhin bevorzugt, wenn die Sprührichtung der zumindest einen Sprühdüse bezogen auf die Umlaufrichtung des Ventilators im wesentlichen tangential rückwärts gerichtet ist.

Hierbei ist von Vorteil, daß die Sprührichtung der Bewegung des Guts optimal angepaßt ist.

In einer weiteren bevorzugten Ausgestaltung des Verfahrens wird das Gut in der zweiten Behandlungsphase mit einem zweiten feuchten Medium innerhalb der Prozeßkammer beaufschlagt.

Bei der Vorrichtung ist dazu bevorzugt zumindest eine zweite Sprühdüse zum Versprühen eines zweiten feuchten Mediums auf das Gut vorgesehen, die im unteren Bereich der Prozeßkammer angeordnet ist, und deren Sprührichtung im wesentlichen vertikal gerichtet ist.

Hierbei ist von Vorteil, daß, nachdem der Windsichtungseffekt der ersten Behandlungsphase abgeschlossen ist, und sich das Gut nunmehr ausschließlich in der Prozeßkammer fluidisiert bewegt, einem anderen Behandlungsvorgang unterzogen werden kann, bspw. kann in dieser Ausgestaltung ein Coatingprozeß durchgeführt werden.

Es versteht sich, daß in einer Übergangsphase zwischen der ersten Behandlungsphase und der zweiten Behandlungsphase sowohl die zumindest eine erste Sprühdüse als auch die zumindest eine zweite Sprühdüse gleichzeitig betrieben werden können, insbesondere, wenn gemäß einer der zuvor genannten Ausgestaltungen von dem Filter abgereinigtes Filtrat noch über den behältermittleren Kanal in die Prozeßkammer zugeführt wird.

Weitere Vorteile und Merkmale ergeben sich aus der nachfolgenden Beschreibung und der beigefügten Zeichnung.

Es versteht sich, daß die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird mit Bezug auf diese hiernach näher beschrieben. Es zeigen:
- Fig. 1: eine Gesamtdarstellung einer Vorrichtung zum Behandeln von partikelförmigem Gut in einem schematischen Längsschnitt, wobei die Vorrichtung in einem ersten Betriebszustand dargestellt ist, in dem eine erste Behandlungsphase des mit der Vorrichtung durchgeführten Verfahrens veranschaulicht ist;
- Fig. 2: einen Schnitt durch die Vorrichtung in Fig. 1 entlang der Linie II-II in Fig. 4;
- Fig. 3: ein Schnitt durch die Vorrichtung in Fig. 1 entlang der Linie III-III in Fig. 4;
- Fig. 4: die Vorrichtung in Fig. 1 in einem zweiten Betriebszustand, in dem eine zweite Behandlungsphase des mit der Vorrichtung durchgeführten Verfahrens veranschaulicht ist; und
- Fig. 5: die Vorrichtung in Figuren 1 und 4 in einem dritten Betriebszustand, in dem die Vorrichtung entleert wird.

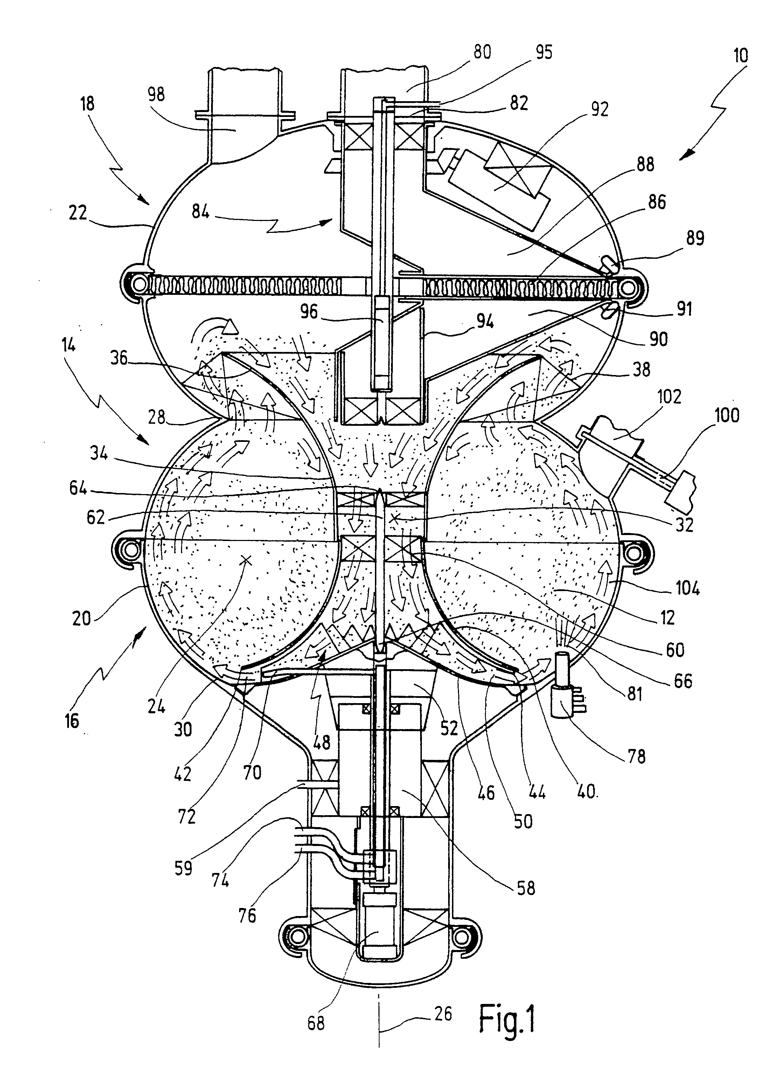

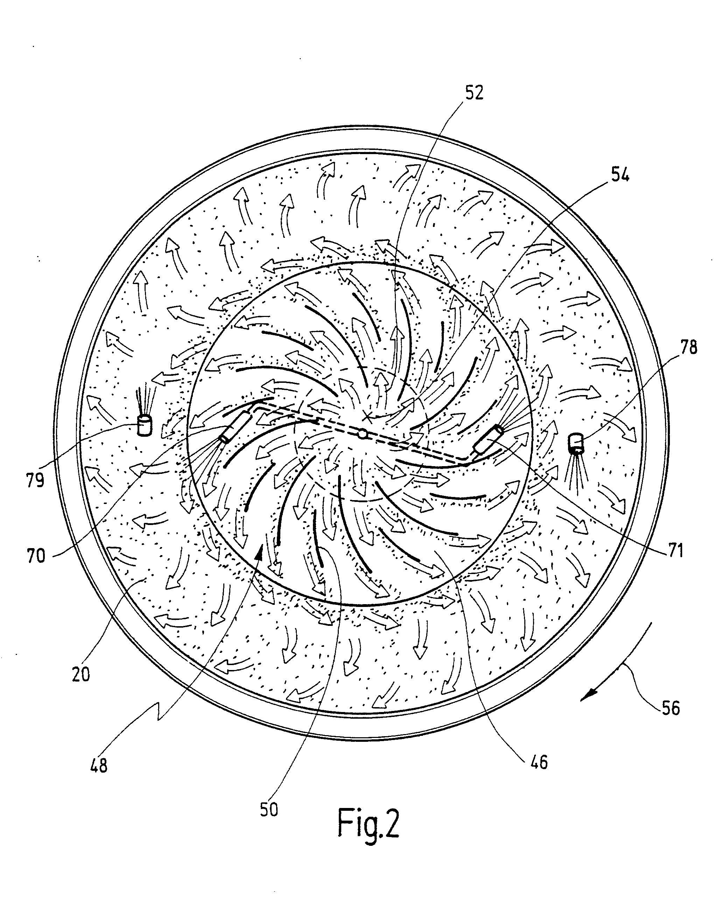

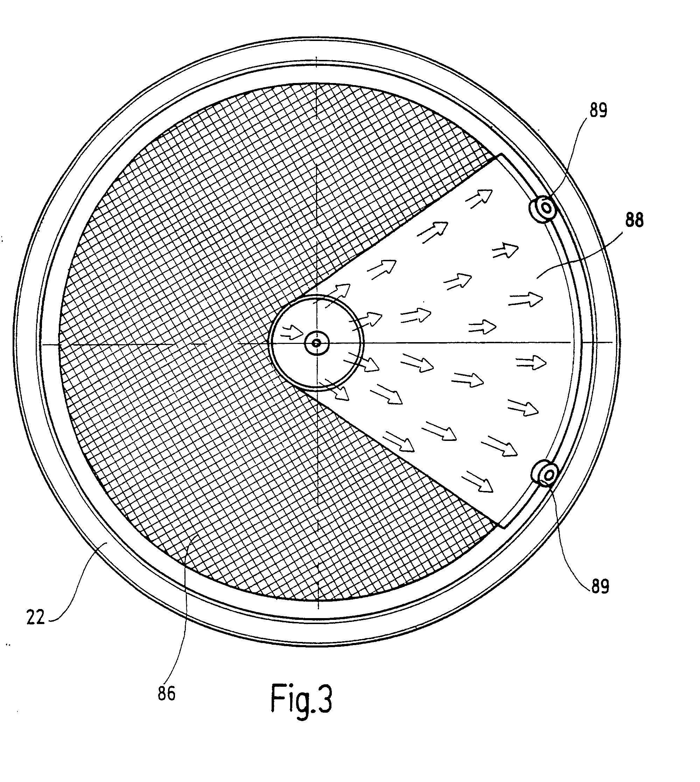

In Fig. 1 ist eine mit dem allgemeinen Bezugszeichen 10 versehene Vorrichtung zum Behandeln von partikelförmigem Gut, insbesondere zum Mischen, Trocknen, Granulieren, Pelletieren und/oder Coaten des Guts dargestellt. Weitere Einzelheiten der Vorrichtung 10 sind in Figuren 2 und 3 dargestellt.

In Fig. 1 und in Fig. 2 ist zur Veranschaulichung des später noch zu beschreibenden Verfahrens, das mit der Vorrichtung 10 durchgeführt wird, das partikelförmige Gut durch Punkte 12 dargestellt.

Die Vorrichtung 10 weist allgemein einen Behälter 14 auf. Der Behälter 14 weist einen ersten, unteren Behälterabschnitt 16 und einen zweiten, oberen Behälterabschnitt 18 auf. Dem ersten Behälterabschnitt 16 ist außenumfänglich ein erster Gehäuseabschnitt 20 zugeordnet, während dem zweiten Behälterabschnitt 18 außenumfänglich ein zweiter Gehäuseabschnitt 22 zugeordnet ist.

Der Behälter 14, genauer gesagt, der erste Behälterabschnitt 16 weist eine als Ringraum ausgebildete Prozeßkammer 24 auf. Die als Ringraum ausgebildete Prozeßkammer 24 ist bezüglich einer Längsmittelachse 26 des Behälters 14 rotationssymmetrisch ausgebildet. Außenseitig ist die Prozeßkammer 24 durch den ersten Gehäuseabschnitt 20 begrenzt, der sphärisch, vorzugsweise kugelabschnittförmig nach außen gewölbt ist. Ein oberer Endabschnitt 28 des ersten Gehäuseabschnitts 20 bildet in Längsrichtung der Längsmittelachse 26 gesehen ein oberes radial äußeres Ende der Prozeßkammer 24, während ein unterer Endabschnitt 30 des ersten Gehäuseabschnitts 20 entsprechend ein radial äußeres unteres Ende der Prozeßkammer 24 bildet.

In dem Behälter 14 ist des weiteren ein behältermittlerer Kanal 32 vorhanden, der im gezeigten Ausführungsbeispiel vorzugsweise behältermittig angeordnet ist. Der behältermittlere Kanal 32 ist von der Prozeßkammer 24 vollumfänglich separiert, und zwar durch einen luftundurchlässigen sich nach oben und nach unten erweiternden Körper 34, der die Längsmittelachse 26 rotationssymmetrisch und vollständig umgibt.

Ein oberer, sich nach außen gekrümmt erweiternder Abschnitt 36 des Körpers 34 überragt in Längsrichtung der Längsmittelachse 26 gesehen den oberen Endabschnitt 28 des ersten Gehäuseabschnitts 20 und damit die Prozeßkammer 24, d. h. der obere Abschnitt 36 ragt in den zweiten Behälterabschnitt 18 hinein.

Der obere Abschnitt 36 des Körpers 34 ist über umfänglich verteilte Halterungen 38 an dem zweiten Gehäuseabschnitt 22 befestigt.

Der Körper 34 ist insgesamt zweiteilig aufgebaut, wobei sich ein unterer Abschnitt 40 bezogen auf die Längsrichtung der Prozeßkammer 24 in Richtung der Längsmittelachse 26 etwa von der Mitte der Prozeßkammer 24 bis zu deren unterem Ende erstreckt. Der untere Abschnitt 40 ist sich radial nach außen erweiternd gekrümmt ausgebildet.

Ein äußerstes unteres Ende 42 des Körpers 34 bzw. des unteren Abschnitts 40 des Körpers 34 ist vertikal von dem unteren Endabschnitt 30 des ersten Gehäuseabschnitts 20 beabstandet, so daß zwischen dem äußersten unteren Ende 42 des Körpers 34 und dem unteren Endabschnitt 30 des ersten Gehäuseabschnitts 20 ein Ringspalt 44 ausgebildet ist, der einen Mündungsbereich des behältermittleren Kanals 32 in die Prozeßkammer 24 bildet. Von der Längsmittelachse 26 aus gesehen verjüngt sich dieser Mündungsbereich zwischen dem unteren Abschnitt 40 des Körpers 34 und einem radial nach außen abfallenden Boden 46 unterhalb des Körpers 34 nach außen bis zu dem äußersten Ende 42 des Körpers 34.

Im unteren Bereich des behältermittleren Kanals 32 und genauer auf dem Boden 46 des Kanals 32 ist ein bezüglich der Längsmittelachse 26 konzentrisch angeordneter Ventilator 48 angeordnet, wobei der Boden 46 Teil des Ventilators 48 ist und mit diesem rotiert. Der Ventilator 48 ist dem Mündungsbereich des behältermittleren Kanals 32 in die Prozeßkammer 24 unmittelbar benachbart angeordnet.

Wie aus Fig. 1 in Verbindung mit Fig. 2 hervorgeht, weist der Ventilator 48 eine Vielzahl sich im wesentlichen radial und vertikal erstreckender Ventilatorflügel 50 auf, deren radial äußere Enden im wesentlichen formgerecht zumindest teilweise in den Mündungsbereich zwischen dem behältermittleren Kanal 32 und der Prozeßkammer 24 ragen. Der Ventilator 48 ist in dem behältermittleren Kanal 32 horizontal liegend angeordnet, wobei die Ventilatorflügel 50 auf dem Boden 46 des Ventilators 48 befestigt sind. Die Ventilatorflügel 50, die in Form von Schaufeln ausgebildet sind, erstrecken sich zum Zentrum des Ventilators 48 hin gesehen nicht bis zur Mitte des Bodens 46, sondern lassen einen mittigen Bereich 54 des Bodens 46 frei.

In Drehrichtung des Ventilators 48 gesehen, die in Fig. 2 mit einem Pfeil 56 angedeutet ist, sind die radial äußeren Enden der Ventilatorflügel 50 rückwärts gekrümmt. Wie aus Fig. 2 weiterhin hervorgeht, erstrecken sich die Ventilatorflügel 50 in radialer Richtung unterschiedlich weit, und zwar enden die zum Zentrum des Ventilators 48 zeigenden Enden der Ventilatorflügel 50 jeweils paarweise versetzt in unterschiedlichen Abständen zum Zentrum des Ventilators 48.

Unter dem Ventilator 48 ist ein Antrieb 58 mit einem Antriebskörper 52 angeordnet, der zum Antreiben des Ventilators 48 in Rotation vorgesehen ist. Der Boden 46 ist an dem Antriebskörper 52 befestigt. Der Antrieb 58 ist vorzugsweise ein pneumatischer Hohlrohr bzw. Hohlwellen-Antriebsmotor mit vorzugsweise stufenloser Drehzahlregulierung. Ein Anschluß 59 für die Druckluftzufuhr ist am Behälter 14 vorgesehen.

Der untere Abschnitt 40 des Körpers 34 ist über umfänglich verteilte Halterungen 60 mit einer Welle 62 drehfest verbunden, die ihrerseits über ein oberes Leerlauflager 64 an dem statischen oberen Abschnitt 36 des Körpers 34 und über ein unteres Leerlauflager 66 auf dem Antriebskörper 52 des Ventilators 48 gelagert ist. Damit kann der untere Abschnitt 40 des Körpers 34 bspw. aufgrund von Luftreibung in Drehrichtung des Ventilators 48 in Drehung versetzt werden.

Der untere Abschnitt 40 des Körpers 34 bildet des weiteren eine Abdeckung der Ventilatorflügel 50 des Ventilators 48, wobei die Ventilatorflügel 50 und der untere Abschnitt 40 des Körpers 34 formgerecht aneinander angepaßt sind.

Der Ventilator 48 samt dem Boden 46 ist über einen Axialantrieb 68 samt dem unteren Abschnitt 40 des Körpers 34 anhebbar, wobei das Anheben des Ventilators 48 und des Bodens 46 dem Entleeren des Guts aus dem Behälter 14 dient, wie später noch beschrieben werden wird.

Im unteren Mündungsbereich des behältermittleren Kanals 32 in die Prozeßkammer 24 ist ferner zumindest eine erste Sprühdüse 70, im vorliegenden Ausführungsbeispiel sind es zwei Sprühdüsen 70 und 71 zum Versprühen eines ersten feuchten Mediums 72 angeordnet. Die Sprührichtung der beiden Sprühdüsen 70 (vgl. Fig. 2) ist im wesentlichen in den Ringspalt 44, d. h. in die Mündung und in die Prozeßkammer 24 hinein gerichtet.

Die beiden Sprühdüsen 70 und 71 sind an dem Ventilator 48 angeordnet und laufen mit diesem um.

Die Sprühdüsen 70 und 71 sind dabei, bezogen auf die Umlaufrichtung des Ventilators 48 gemäß dem Pfeil 56, im wesentlichen tangential rückwärts gerichtet. Die Sprührichtung der Sprühdüsen 70 und 71 entspricht dabei im wesentlichen der Orientierung der radial äußeren Enden der Ventilatorflügel 50.

Im unteren Bereich des Behälters 14 sind für die Versorgung der Sprühdüsen 70 und 71 entsprechend Anschlüsse 74 und 76 für Sprühluft und Flüssigkeit vorgesehen.

In der Prozeßkammer, und zwar in deren unteren Bereich in dem ersten Gehäuseabschnitt 20, ist zumindest eine zweite Sprühdüse, im vorliegenden Ausführungsbeispiel sind zwei Sprühdüsen 78 und 79 zum Versprühen eines zweiten feuchten Mediums 81 auf das Gut vorgesehen, wobei die Sprührichtung der zweiten Düsen 78 und 79 im wesentlichen vertikal und vorzugsweise zusätzlich mit tangentialer Komponente gerichtet ist.

Der Behälter 14 ist weiterhin mit einem externen, nicht näher dargestellten Prozeßluftzufuhrsystem verbunden oder verbindbar, von dem in Fig. 1 lediglich ausschnittsweise eine Zuleitung 80 dargestellt ist, die an eine auf der Oberseite des zweiten Behälterabschnitts 18 vorgesehene Lufteintrittsöffnung 82 anschließbar ist. Der Behälter 14 weist einen sich an die Lufteintrittsöffnung 82 anschließenden Zuluftkanal 84 im zweiten Behälterabschnitt 18 auf. In den Zuluftkanal 84 ist ein Filter 86 geschaltet, das vorzugsweise als flachbauendes, scheibenförmiges Tiefenfilter-Gewirke aus Edelstahl-Verbundmaterial, Kunststoff- und/oder Textilgewebe gebildet ist. Das Filter 86 erstreckt sich dabei über den gesamten Durchmesser des Behälters 14 respektive des zweiten Behälterabschnitts 18.

Der Zuluftkanal 84 weist einen oberhalb des Filters 86 angeordneten ersten Schuh 88 und, diesem gegenüberliegend und unterhalb des Filters 86, einen zweiten Schuh 90 auf. Wie aus Fig. 3 hervorgeht, die eine Draufsicht auf das Filter 86 zeigt, überspannt der erste Schuh 88, und das gleiche gilt für den zweiten Schuh 90, einen Sektor des Filters 86, im vorliegenden Ausführungsbeispiel einen Sektor von etwa 60°, allgemein etwa 15° - 90°, des hier rundflächigen Filters 86.

Über einen Antrieb 92 sind der erste Schuh 88 und der zweite Schuh 90 in gleichsinniger und gleichphasiger Bewegung um die Längsmittelachse 26 des Behälters 24 in Rotation versetzbar, wodurch der erste Schuh 88 und der zweite Schuh 90 die gesamte Oberfläche des Filters 86 überstreichen. Der erste Schuh 88 und der zweite Schuh 90 sind über entsprechende Laufrollen 89 und 91 an der Innenseite des zweiten Gehäuseabschnitts 22 rollend gelagert bzw. geführt.

Der Zuluftkanal 84 ist über den zweiten Schuh 90 mit dem behältermittleren Kanal 32 verbunden. In dem Zuluftkanal 84, genauer gesagt in dem zweiten Schuh 90, ist ein Ventil 94 oder Schott angeordnet, dessen Funktion darin besteht, den Zuluftkanal 84 mit dem behältermittleren Kanal 32 prozeßluftleitend zu verbinden oder den Kanal 32 gegen den Zuluftkanal 84 abzuschließen.

Dazu ist das Ventil 94 über ein vorzugsweise pneumatisch über einen Druckluftanschluß 95 angetriebenes Verstellorgan 96 in Richtung der Längsmittelachse 26 des Behälters 14 axial verfahrbar. In Fig. 1 ist das Ventil 94 in einer Betriebsstellung dargestellt, in der der behältermittlere Kanal 32 gegen den Zuluftkanal 34 dicht abgeschlossen ist. Demgegenüber kommuniziert der behältermittige Kanal 32 in seinem oberen Bereich mit dem oberen offenen Bereich der Prozeßkammer 24.

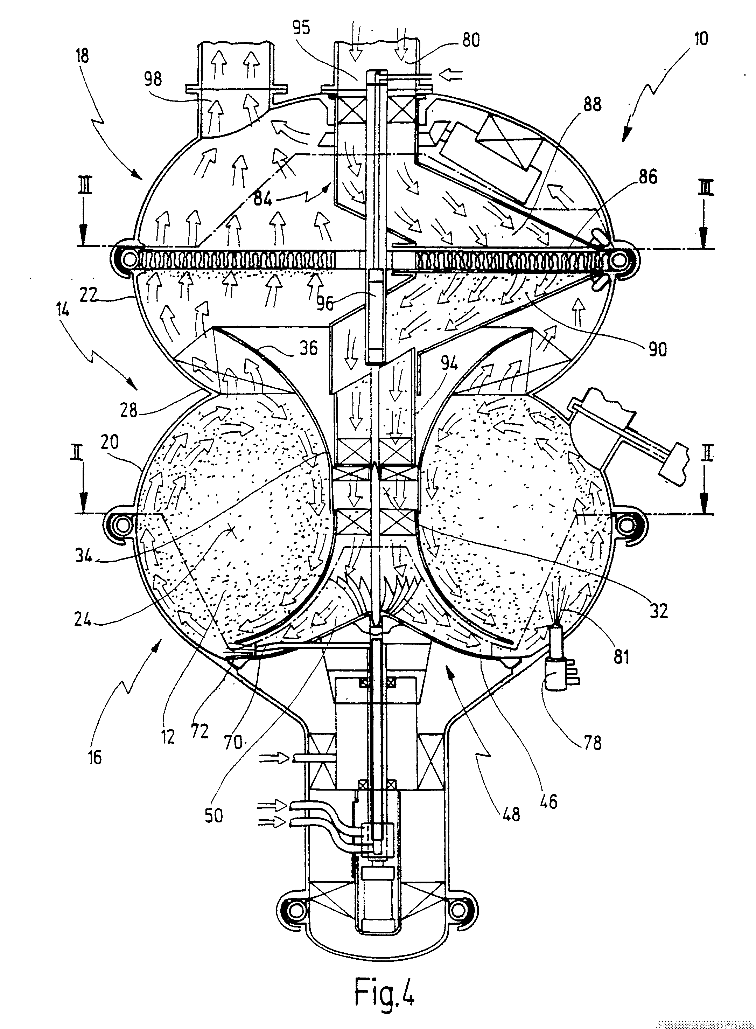

In Fig. 4 ist das Ventil 94 dagegen in einer zweiten Betriebsstellung gezeigt, in der der Zuluftkanal 84 prozeßluftleitend mit dem behältermittleren Kanal 32 verbunden ist, der behältermittlere Kanal 32 dagegen jedoch nicht prozeßluftleitend mit der oberen Öffnung der Prozeßkammer 24 verbunden ist.

Das Ventil 94 kann jedoch zwischen den in Figuren 1 und 4 gezeigten maximalen Endstellungen Zwischenstellungen einnehmen, in denen sowohl der behältermittlere Kanal 32 mit dem Zuluftkanal 84 als auch mit dem oberen luftaustrittseitigen Ende der Prozeßkammer 24 prozeßluftleitend verbunden ist.

In dem zweiten Behälterabschnitt 18 ist neben der Lufteintrittsöffnung 82 ferner eine Luftaustrittsöffnung 98 vorhanden.

Der Behälter 14 weist ferner in seinem ersten Behälterabschnitt 16 eine mit einem Verschließorgan 100 verschließbare Befüllöffnung 102 zum Befüllen des Behälters 14 mit dem partikelförmigen Gut auf.

Nachfolgend wird nun anhand der Figuren 1 und 4 ein Verfahren zum Behandeln partikelförmigen Guts beschrieben, das mit der Vorrichtung 10 durchgeführt werden kann.

Zunächst wird das partikelförmige Gut durch die Befüllöffnung 102 in den Behälter 14 eingefüllt, und die Befüllöffnung wird mittels des Verschlußorgans 100 wieder verschlossen.

Das partikelförmige Gut liegt bei einem Granulier- oder Pelletiervorgang zunächst in pulvriger Form vor.

Das Ventil 94 in dem Zuluftkanal 84 befindet sich in seiner in Fig. 1 gezeigten Betriebsstellung. In dieser Betriebsstellung wird keine Prozeßluft von dem externen Prozeßluftzufuhrsystem in den Behälter 14 zugeführt.

Der Ventilator 48 wird in Betrieb genommen, d. h. in Drehung versetzt. Der Ventilator 48 erzeugt somit im unteren Bereich des behältermittleren Kanals 32 eine Prozeßluftströmung mit entsprechendem Druck, wobei die Prozeßluft durch die Drehung des Ventilators 48 mit einem zentrifugalen tangentialen Drall in die Prozeßkammer 24 eingeleitet wird. Die Prozeßluftströmung, die in Fig. 1 mit Strömungspfeilen 104 veranschaulicht ist, breitet sich in der Prozeßkammer 24 entlang der Innenseite des ersten Gehäuseabschnitts 20 nach oben aus, und im oberen Bereich der Prozeßkammer 24 entweicht die Prozeßluft wieder aus der Prozeßkammer 24. Aufgrund der Strömung der Prozeßluft innerhalb der Prozeßkammer 24 mit entsprechendem dynamischen Druck wird das partikelförmige Gut in der Prozeßkammer 24 bewegt, und zwar von unten nach oben entlang der Innenseite des ersten Gehäuseabschnitts 20. Bei der Bewegung des Guts entlang dieser Innenseite nehmen die Partikel einen Lückenabstand untereinander ein, so daß eine fluidisierende Bewegung der Luft erzielt wird.

Bei laufendem Ventilator 48 wird über die beiden ersten Sprühdüsen 70 und 71 das Gut mit dem ersten feuchten Medium beaufschlagt. In dieser ersten Behandlungsphase liegt das partikelförmige Gut, das noch nicht vollständig mit dem ersten feuchten Medium beaufschlagt ist, somit sowohl in pulvriger als auch bereits angefeuchteter bzw. agglomerierter Form vor. Die bereits angefeuchteten oder agglomerierten Partikel des Guts besitzen aufgrund ihrer höheren Masse am oberen Endabschnitt 28 des ersten Gehäuseabschnitts 20 bereits eine solche Trägheit bzw. einen Impuls, daß sie sich von der nach oben aus der Prozeßkammer 24 austretenden Prozeßluft trennen und sich ballistisch zu dem Körper 34 hin bewegen, entlang dem sie wieder in den unteren Bereich der Prozeßkammer 24 zurückgleiten. Die bereits angefeuchteten oder agglomerierten Partikel führen demnach in der Prozeßkammer 24 eine im wesentlichen kreisförmig zirkulierende Bewegung aus.

Die noch nicht angefeuchteten pulvrigen Partikel des Guts haben indes noch nicht genügend Masse und somit Impuls, um sich im oberen Bereich der Prozeßkammer von der Prozeßluftströmung zu trennen.

Die Prozeßluft wird nun nach dem Austritt aus der Prozeßkammer aus deren oberen Bereich in dieser ersten Behandlungsphase zumindest teilweise, im geeigneten Ausführungsbeispiel vollständig, wieder in den behältermittleren Kanal 32 geleitet und dort aufgrund des durch den Ventilator 48 bewirkten nach unten gerichteten Saugdruckes wieder nach unten geleitet. Der noch pulvrige und somit windsichtige Anteil des partikelförmigen Guts wird von der aus dem oberen Bereich der Prozeßkammer 24 austretenden Prozeßluft mitgerissen und ebenfalls in den behältermittleren Kanal 32 durch die Prozeßluftströmung darin nach unten befördert. Dieser Anteil des Guts tritt dann mit den Ventilatorflügeln 50 in Kontakt und wird durch die Rotationsbewegung des Ventilators 48 mit zentrifugal tangentialer Bewegungskomponente und mit Drall in die Prozeßkammer 24 teils unter Wirkung der Prozeßluftströmung und teils unter Wirkung der Ventilatorflügel 50 selbst, zurückgeführt, und zwar in deren Unterbett. Im unteren Mündungsbereich des behältermittleren Kanals 32 in die Prozeßkammer 24 wird dabei das dort hindurch bewegte Gut mittels der Sprühdüsen 70 und 71, die mit dem Ventilator 48 umlaufen, mit dem ersten feuchten Medium besprüht, wodurch gewährleistet ist, daß nach und nach das gesamte noch pulvrige Gut mit dem ersten feuchten Medium beaufschlagt und dadurch angefeuchtet und gebunden wird, ohne daß ein Teil des Guts diesem Prozeß entzogen wird.

Aufgrund der Erzeugung der Prozeßluftströmung mittels des Ventilators 48 entsteht im Bereich des Ringspaltes 44 zwischen dem unteren Abschnitt 40 des Körpers 34 und dem unteren Endabschnitt 30 des ersten Gehäuseabschnitts 20 ein Drallbereich, der insbesondere beim Pelletieren die sphärische Formgebung der Pellets begünstigt.

In der zuvor beschriebenen ersten Behandlungsphase, die auch als Feuchtphase bezeichnet werden kann, zirkuliert die Prozeßluft somit in einem im wesentlichen geschlossenen Kreislauf ohne zusätzliche Zuführung von Prozeßluft von extern. Die Feuchtphase dient beim Granulieren oder Pelletieren zur Bildung von Granulaten oder sphärischen Teilchen (Pellets).

Die erste Behandlungsphase wird vorzugsweise so lange durchgeführt, bis das gesamte partikelförmige Gut granuliert oder pelletiert ist und somit der Windsichtungseffekt abgeschlossen ist, so daß das Gut nur noch in der Prozeßkammer 24 durch die Prozeßluft zirkulierend und fluidisiert bewegt wird.

An die erste Behandlungsphase kann sich nun eine Trocknungsphase und/oder Coatingphase anschließen.

Dazu wird das Ventil 94 aus der in Fig. 1 dargestellten Betriebsstellung in die in Fig. 4 dargestellte Betriebsstellung verfahren. Nunmehr ist der behältermittlere Kanal 32 mit dem Zuluftkanal 84 und über diesen mit dem externen Prozeßluftzufuhrsystem verbunden, über das von extern Prozeßluft als Trocknungsluft zugeführt werden kann. Die von extern zugeführte Prozeßluft wird dabei durch das Filter 86 geleitet, wobei der erste Schuh 88 und der zweite Schuh 90 um das Filter 86 umlaufen. An dem Filter 86 ggf. noch anhaftendes partikelförmiges Gut wird dabei von dem Filter 86 abgeblasen und über den behältermittleren Kanal 32 der Prozeßkammer 24 in deren Unterbett und damit dem Prozeß wieder zugeführt, so daß nunmehr alles anfangs noch pulvrige Gut dem Prozeß zugeführt ist.

Die nunmehr aus dem oberen Bereich der Prozeßkammer 24 entweichende Prozeßluft entweicht über den zweiten Behälterabschnitt 18 aus der Luftaustrittsöffnung 98.

In der Betriebsstellung des Ventils 94 gemäß Fig. 4 ist der behältermittlere Kanal 32 mit dem oberen Bereich der Prozeßkammer 24, d. h. dem Luftaustritt aus der Prozeßkammer 24 nicht mehr prozeßluftleitend verbunden. Auf diese Weise kann die Prozeßluft, die in der Prozeßkammer zum Trocknen des Guts Feuchtigkeit aufgenommen hat, aus dem Behälter 14 abgeführt und außerhalb des Behälters 14 entfeuchtet werden, wonach sie dann wieder als trockene und entsprechend konditionierte Trocknungsluft über den Zuluftkanal 84 dem Prozeß zugeführt werden kann. Alternativ kann die Zufuhrvorrichtung auch im Frischluft/Fortluft-Modus betrieben werden.

Die von extern zugeführte Prozeßluft dient nicht dem Bewegen des Guts in der Prozeßkammer 24, sondern lediglich dem Trocknen oder Konditionieren des Guts. Die für die Bewegung des Guts erforderliche Prozeßluftströmung wird allein durch den Ventilator 48 erzeugt.

Anstelle der in Fig. 4 gezeigten Betriebsstellung kann das Ventil 94 auch in eine Zwischenbetriebsstellung zwischen der in Fig. 1 dargestellten Betriebsstellung und der in Fig. 4 dargestellten Betriebsstellung verfahren werden, wodurch der Übergang von der ersten Behandlungsphase in die zweite Behandlungsphase vorteilhafterweise auch fließend durchgeführt werden kann.

Wenn in der zweiten Behandlungsphase die in der ersten Behandlungsphase gebildeten Granulate oder Pellets mit einem Überzugsmedium versehen werden sollen, bspw. lackiert werden sollen, wird mittels den zweiten Sprühdüsen 78 und 79 ein zweites feuchtes Medium, bspw. ein Lack, in die Prozeßkammer 24 mit im wesentlichen vertikal und vorzugsweise auch tangentialer Sprührichtungskomponente gesprüht, wodurch das in der Prozeßkammer 24 fluidisierte Gut mit dem zweiten feuchten Medium beaufschlagt wird.

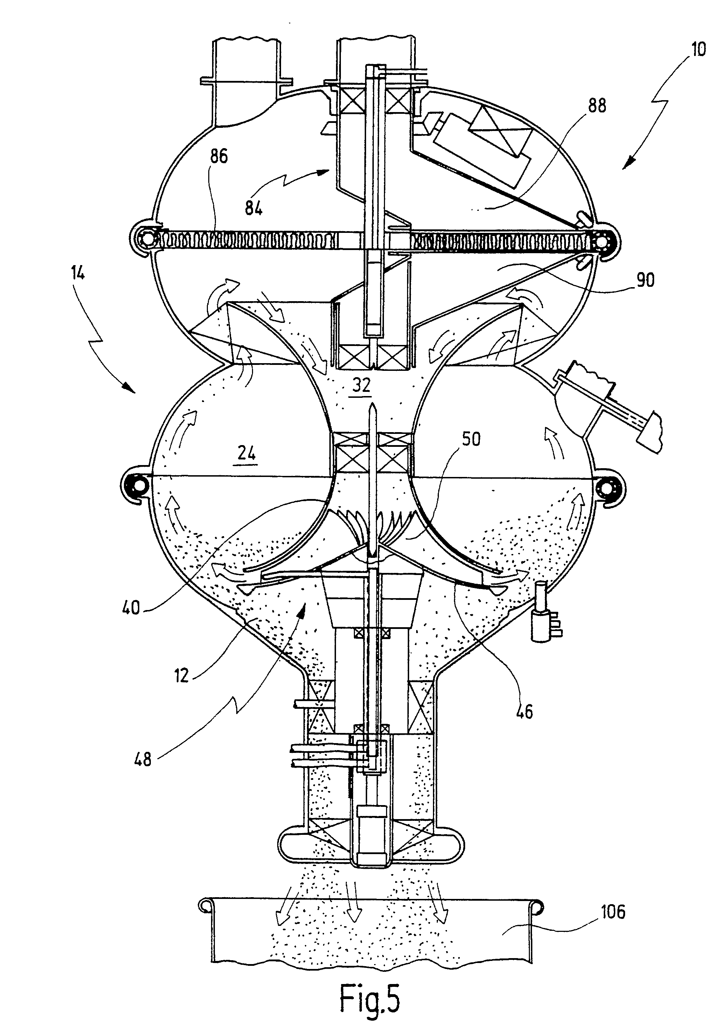

Nach Beendigung der zweiten Behandlungsphase, d. h. nach dem Trocknen und/oder vollständigen Beschichten des partikelförmigen Guts in der Prozeßkammer 24 kann das partikelförmige Gut aus dem Behälter 14 entleert werden, wie in Fig. 5 dargestellt ist. Dazu wird mittels des Axialantriebs 68 der Ventilator 48 einschließlich dem Boden 46 und zusammen mit dem unteren Abschnitt 40 des Körpers 34 angehoben, so daß das partikelförmige Gut nach unten aus der Prozeßkammer 24 abfließen und am unteren Ende des Behälters 14 in einen unter dem Behälter 14 vorhandenen Auffangbehälter 106 entleert werden kann.

Durch leichte Drehung des Ventilators 48 kann dabei sichergestellt werden, daß Restmengen an partikelförmigem Gut, die sich ggf. in dem Ventilator 48 zwischen den Ventilatorflügeln 50 befinden, herausgeschleudert werden und schließlich nach unten abfließen können. Das Ventil 94 kann dazu wieder in die Betriebsstellung gemäß Fig. 1 verfahren werden, wodurch sich im oberen Bereich befindliches partikelförmiges Gut über die Saugwirkung vollständig abgesaugt und ebenfalls abgeführt werden kann.

Nach dem Entleeren kann der Innenraum des Behälters 14 wie folgt gereinigt werden. In der Betriebsstellung der Vorrichtung 10 gemäß Fig. 5 oder in einer Betriebsstellung der Vorrichtung gemäß Figuren 1 oder 4 wird in den Behälter 14 Waschflüssigkeit durch die Befüllöffnung 102 eingefüllt, vorzugsweise mit einem Füllstand etwa bis zum größten Durchmesser der Prozeßkammer 24. Durch in Betrieb nehmen des Ventilators 48 wird die Waschflüssigkeit dann sehr intensiv in dem Behälter 14, vor allem in der Prozeßkammer 24 umgewälzt und bewegt bzw. sogar agitiert, wodurch ein sehr hoher Reinigungseffekt erzielt wird. Die Waschflüssigkeit kann dann in der Betriebsstellung der Vorrichtung 10 gemäß Fig. 5 nach unten aus dem Behälter 14 abgelassen werden.

Oberhalb des Filters 86 kann zusätzlich noch eine Sprüheinrichtung zum Versprühen von Waschflüssigkeit zur Reinigung des Filters 86 und des Innenraums des oberen Behälterabschnitts 18 vorgesehen sein.

Der Ventilator 48 ermöglicht somit vorteilhafterweise ein Washing-in-place bzw. ein Cleaning-in-place.

## Patentansprüche

1. Verfahren zum Behandeln partikelförmigen Guts, insbesondere zum Mischen, Trocknen, Granulieren, Pelletieren und/oder Coaten des Guts, bei dem das Gut in einen Behälter (14) gefüllt wird, der eine um eine Längsmittelachse (26) des Behälters herum angeordnete, als Ringraum ausgebildete Prozeßkammer (24) aufweist, und bei dem Prozeßluft von einem von der Prozeßkammer (24) getrennten behältermittleren Kanal (32) aus in einen unteren Bereich der Prozeßkammer (24) eingeleitet wird und in der Prozeßkammer (24) nach oben strömt, um das Gut in der Prozeßkammer zu bewegen, wobei die Prozeßluft aus der Prozeßkammer (24) aus deren oberen Bereich wieder austritt, **dadurch gekennzeichnet, daß** die Prozeßluft zumindest in einer ersten Behandlungsphase nach dem Austreten aus dem oberen Bereich der Prozeßkammer (24) in fortgesetzter kreislaufartiger Strömung zumindest teilweise in den behältermittleren Kanal (32) geleitet und dort wieder nach unten geführt wird, wo sie erneut in die Prozeßkammer (24) eingeleitet wird.

2. Verfahren nach Anspruch 1, **dadurch gekennzeichnet, daß** die Strömung der Prozeßluft im unteren Bereich des behältermittleren Kanals (32) dem Mündungsbereich in die Prozeßkammer (24) unmittelbar benachbart erzeugt wird, so daß im behältermittleren Kanal (32) ein nach unten gerichteter Saugdruck ansteht.

3. Verfahren nach Anspruch 1 oder 2, **dadurch gekennzeichnet, daß** die Prozeßluft in die Prozeßkammer (24) mit einem zentrifugalen und tangentialen Drall eingeleitet wird.

4. Verfahren nach einem der Ansprüche 1 bis 3, **dadurch gekennzeichnet, daß** die Prozeßluft in der ersten Behandlungsphase in dem Behälter (14) als im wesentlichen geschlossenes Kreislaufsystem umgewälzt wird.

5. Verfahren nach einem der Ansprüche 1 bis 4, **dadurch gekennzeichnet, daß** in zumindest einer zweiten Behandlungsphase zusätzlich Prozeßluft von außerhalb des Behälters (14) in den behältermittleren Kanal zugeführt und in den unteren Bereich der Prozeßkammer (24) eingeleitet wird.

6. Verfahren nach Anspruch 5, **dadurch gekennzeichnet, daß** in der zweiten Behandlungsphase die aus der Prozeßkammer (24) aus deren oberen Bereich austretende Prozeßluft zumindest teilweise nach außerhalb des Behälters (14) abgeführt wird, ohne über den behältermittleren Kanal (32) in die Prozeßkammer (24) zurückgeführt zu werden.

7. Verfahren nach Anspruch 5 oder 6, **dadurch gekennzeichnet, daß** der Übergang zwischen der ersten Behandlungsphase und der zweiten Behandlungsphase fließend durchgeführt wird.

8. Verfahren nach einem der Ansprüche 5 bis 7, **dadurch gekennzeichnet, daß** die von außerhalb des Behälters (14) zugeführte Prozeßluft durch ein oberhalb der Prozeßkammer (24) angeordnetes Filter (86) geleitet wird.

9. Verfahren nach einem der Ansprüche 1 bis 8, **dadurch gekennzeichnet, daß** das Gut in der ersten Behandlungsphase mit einem ersten feuchten Medium im unteren Mündungsbereich des behältermittleren Kanals (32) in die Prozeßkammer (24) beaufschlagt wird.

10. Verfahren nach einem der Ansprüche 5 bis 8 oder 9, sofern dieser auf einen der Ansprüche 5 bis 8 rückbezogen ist, **dadurch gekennzeichnet, daß** das Gut in der zweiten Behandlungsphase mit einem zweiten feuchten Medium innerhalb der Prozeßkammer (24) beaufschlagt wird.

11. Vorrichtung zum Behandeln partikelförmigen Guts, insbesondere zum Mischen, Trocknen, Granulieren, Pelletieren und/oder Coaten des Guts, mit einem Behälter (14), der eine um eine Längsmittelachse (26) des Behälters (14) angeordnete, als Ringraum ausgebildete Prozeßkammer (24) aufweist, und mit einem von der Prozeßkammer (24) separierten behältermittleren Kanal (32) als Strömungskanal für Prozeßluft, der in den unteren Bereich der Prozeßkammer (24) mündet, wobei ein oberer Bereich der Prozeßkammer (24) offen ist, **dadurch gekennzeichnet, daß** im unteren Bereich des behältermittleren Kanals (32) dem Mündungsbereich in die Prozeßkammer (24) unmittelbar benachbart ein Ventilator (48) angeordnet ist.

12. Vorrichtung nach Anspruch 11, **dadurch gekennzeichnet, dass** der obere offene Bereich der Prozeßkammer (24) in zumindest einem ersten Betriebszustand mit dem behältermittleren Kanal (32) prozeßluftleitend kommuniziert, indem der behältermittlere Kanal (32) sich umfänglich zum oberen Bereich der Prozeßkammer (24) erweiternd und zur Prozeßkammer (24) hin öffnend ausgebildet ist.

13. Vorrichtung nach Anspruch 11 oder 12, **dadurch gekennzeichnet, daß** der Ventilator (48) sich im wesentlichen radial und vertikal erstreckende Ventilatorflügel (50) aufweist, deren radial äußere Enden im wesentlichen formgerecht zumindest teilweise in den Mündungsbereich zwischen dem behältermittleren Kanal (32) und der Prozeßkammer (24) ragen.

14. Vorrichtung nach Anspruch 13, **dadurch gekennzeichnet, daß** die radial äußeren Enden der Ventilatorflügel (50) in Drehrichtung des Ventilators (48) gesehen rückwärts gekrümmt sind.

15. Vorrichtung nach Anspruch 13 oder 14, **dadurch gekennzeichnet, daß** die ventilatorflügel (50) sich radial unterschiedlich weit erstrecken.

16. Vorrichtung nach einem der Ansprüche 11 bis 15, **dadurch gekennzeichnet, daß** der Behälter (14) mit einem externen Prozeßluftzufuhrsystem verbunden oder verbindbar ist und einen Zuluftkanal (84) aufweist, der mit dem behältermittleren Kanal (32) verbunden ist.

17. Vorrichtung nach Anspruch 16, **dadurch gekennzeichnet, daß** ein Ventil (94) oder Schott vorgesehen ist, um den Zuluftkanal (84) mit dem behältermittleren Kanal (32) prozeßluftleitend zu verbinden oder diesen gegen den Zuluftkanal (84) abzuschließen.

18. Vorrichtung nach Anspruch 17, **dadurch gekennzeichnet, daß** das Ventil (94) oder Schott in einem Betriebszustand, in dem der Zuluftkanal (84) mit dem behältermittleren Kanal (32) prozeßluftleitend verbunden ist, den behältermittleren Kanal (32) gegen den oberen offenen Bereich der Prozeßkammer (24) im wesentlichen luftdicht abschließt.

19. Vorrichtung nach Anspruch 17 oder 18, **dadurch gekennzeichnet, daß** das Ventil (94) oder Schott zumindest eine Betriebsstellung aufweist, in der sowohl der Zuluftkanal (84) mit dem behältermittleren Kanal (32) als auch der behältermittlere Kanal (32) mit dem oberen offenen Bereich der Prozeßluftkammer (24) prozeßluftleitend verbunden ist.

20. Vorrichtung nach einem der Ansprüche 16 bis 19, **dadurch gekennzeichnet, daß** oberhalb der Prozeßkammer (24) ein Filter (86) angeordnet ist, das in den Strömungsweg des Zuluftkanals (84) geschaltet ist.

21. Vorrichtung nach Anspruch 20, **dadurch gekennzeichnet, daß** der Zuluftkanal (84) einen oberhalb des Filters (86) angeordneten, einen Sektor desselben überspannenden ersten Schuh (88) und einen zweiten, dem ersten Schuh (88) gegenüberliegenden Schuh (90) unterhalb des Filters (86) aufweist, der mit dem behältermittleren Kanal (32) verbunden ist, und daß der erste und der zweite Schuh (88, 90) in eine Umlaufbewegung auf dem Filter (86) versetzbar sind.

22. Vorrichtung nach einem der Ansprüche 11 bis 21, **dadurch gekennzeichnet, daß** zumindest eine erste Sprühdüse (70, 71) zum Versprühen eines ersten feuchten Mediums im Bereich der unteren Mündung des behältermittleren Kanals (32) in die Prozeßkammer (24) angeordnet ist, deren Sprührichtung im wesentlichen in die Prozeßkammer (24) hinein gerichtet ist.

23. Vorrichtung nach Anspruch 22, **dadurch gekennzeichnet, daß** die zumindest eine Sprühdüse (70, 71) an dem Ventilator (48) angeordnet ist und mit diesem umläuft.

24. Vorrichtung nach Anspruch 23, **dadurch gekennzeichnet, daß** die Sprührichtung der zumindest einen Sprühdüse (70, 71) bezogen auf die Umlaufrichtung des Ventilators (48) im wesentlichen rückwärts gerichtet ist.

25. Vorrichtung nach einem der Ansprüche 11 bis 24, **dadurch gekennzeichnet, daß** zumindest eine zweite Sprühdüse (78, 79) zum Versprühen eines zweiten feuchten Mediums auf das Gut vorgesehen ist, die im unteren Bereich der Prozeßkammer (24) angeordnet ist, und deren Sprührichtung im wesentlichen vertikal, vorzugsweise tangential in Drehrichtung des Ventilators (48), gerichtet ist.

## Claims

1. A method for treating particulate material, in particular for mixing, drying, granulating, pelletizing and/or coating the material, in which the material is put into a container (14) which has a process chamber (24) arranged around a longitudinal mid-axis (26) of the container and is formed as an annular chamber, and in which process air is introduced into a lower region of the process chamber (24) from a container central duct (32) which is separate from the process chamber (24), and flows upwards in the process chamber (24) in order to move the material in the process chamber, the process air emerging from the process chamber (24) again from the upper region of the latter, **characterized in that**, at least in a first treatment phase, after emerging from the upper region of the process chamber (24), the process air is at least partly led into the container central duct (32) in a continued, circulation-type flow, and there is led downwards again, where it is introduced into the process chamber (24) again.

2. The method of claim 1, **characterized in that** the flow of the process air in the lower region of the container central duct (32) is produced immediately adjacent to the opening area into the process chamber (24), so that a suction pressure which is oriented downwards is present in the container central duct (32).

3. The method of claim 1 or 2, **characterized in that** the process air is introduced into the process chamber (24) with a centrifugal and tangential spin.

4. The method of anyone of claims 1 through 3, **characterized in that**, in the first treatment phase, the process air is circulated in the container (14) as a substantially closed circulation system.

5. The method of anyone of claims 1 through 4, **characterized in that**, in at least one second treatment phase, process air is fed into the container central duct from outside the container (14) and is introduced into the lower region of the process chamber (24).

6. The method of claim 5, **characterized in that**, in the second treatment phase, the process air emerging from the process chamber (24) from the upper region of the latter is at least partly led away to outside the container (14) without being fed back into the process chamber (24) via the container central duct (32).

7. The method of claim 5 or 6, **characterized in that** the transition between the first treatment phase and the second treatment phase is carried out in a smooth manner.

8. The method of anyone of claims 5 through 7, **characterized in that** the process air fed in from outside the container (14) is led through a filter (86) arranged above the process chamber (24).

9. The method of anyone claims 1 through 8, **characterized in that**, in the first treatment phase, the material is acted on with a first moist medium in the lower opening area of the container central duct (32) into the process chamber (24).

10. The method of anyone of claims 5 through 8 or 9, if this refers back to anyone of claims 5 through 8, **characterized in that**, in the second treatment phase, the material is acted on with a second moist medium within the process chamber (24).

11. An apparatus for treating particulate material, in particular for mixing, drying, granulating, pelletizing and/or coating the material, comprising a container (14) which has a process chamber (24) which is arranged around a longitudinal mid-axis (26) of the container (14) and is formed as an annular chamber, and having a container central duct (32), separated from the process chamber (24), as a flow duct for process air, which duct opens into the lower region of the process chamber (24), an upper region of the process chamber (24) being open, **characterized in that** in the lower region of the container central duct (32), a fan (48) is arranged immediately adjacent to the opening area into the process chamber (24).

12. The apparatus of claim 11, **characterized in that** the upper open region of the process chamber (24) communicates with the container central duct (32) so as to conduct process air in at least one first operating state, by the container central duct (32) widening circumferentially towards the upper region of the process chamber (24) and opening towards the process chamber (24).

13. The apparatus of claim 11 or 12, **characterized in that** the fan (48) has fan blades (50) which extend substantially radially and vertically, whose radially outer ends at least partly project, substantially with a suitable shape, into the opening area between the duct (38) in the middle of the container and the process chamber (24).

14. The apparatus of claim 13, **characterized in that** the radially outer ends of the fan blades (50) are curved backwards as viewed in the direction of rotation of the fan (48).

15. The apparatus of claim 13 or 14, **characterized in that** the fan blades (50) extend to different radial extents.

16. The apparatus of anyone of claims 11 through 15, **characterized in that** the container (14) is connected or can be connected to an external process air feed system and has a feed duct (84) which is connected to the container central duct (32).

17. The apparatus of claim 16, **characterized in that** a valve (94) or bulkhead is provided in order to connect the feed air duct (84) to the container central duct (32) so as to conduct process air or to seal off the said duct with respect to the feed duct (84).

18. The apparatus of claim 17, **characterized in that**, in an operating state in which the feed air duct (84) is connected to the container central duct (32) so as to conduct process air, the valve (94) or bulkhead seals off the container central duct (32) in a substantially airtight manner with respect to the upper open region of the process chamber (24).

19. The apparatus of claim 17 or 18, **characterized in that** the valve (94) or bulkhead has at least one operating position in which both the feed air duct (84) is connected to the container central duct (32) and the container central duct (32) is connected to the upper open region of the process chamber (24), both so as to conduct air.

20. The apparatus of anyone of claims 16 through 19, **characterized in that** above the process chamber (24) there is arranged a filter (86) which is connected into the flow path of the feed air duct (84).

21. The apparatus of claim 20, **characterized in that** the feed air duct (84) has a first shoe (88) arranged above the filter (86) and covering a sector of the latter, and a second shoe (90) opposite the first shoe (88) and underneath the filter (86), which is connected to the container central duct (32), and **in that** the first and the second shoe (88, 90) can be set into a circulating movement on the filter (86).

22. The apparatus of anyone of claims 11 through 21, **characterized in that** at least one first spray nozzle (70, 71) for spraying a first moist medium is arranged in the region of the lower opening of the container central duct (32) into the process chamber (24), its spraying direction being oriented substantially into the process chamber (24).

23. The apparatus of claim 22, **characterized in that** the at least one spray nozzle (70, 71) is arranged on the fan (48) and revolves with the latter.

24. The apparatus of claim 23, **characterized in that** the spraying direction of the at least one spray nozzle (70, 71) is oriented substantially backwards as based on the direction of rotation of the fan (48).

25. The apparatus of anyone of claims 11 through 24, **characterized in that** at least one second spray nozzle (78, 79) for spraying a second moist medium onto the material is provided, which is arranged in the lower region of the process chamber (24) and whose spraying direction is oriented substantially vertically, preferably tangentially in the direction of rotation of the fan (48).

## Revendications

1. Procédé de traitement d'un produit sous forme de particules, en particulier de mixage, séchage, granulation, pelletisation et/ou enrobage du produit, dans lequel le produit est introduit dans un récipient (14) qui comporte une chambre de processus (24) disposée autour d'un axe médian longitudinal (26) du récipient et réalisée comme chambre annulaire, et dans lequel l'air de processus est introduit à partir d'un canal (32) central au récipient, séparé de la chambre de processus (24), dans une zone inférieure de la chambre de processus (24), et s'écoule vers le haut dans la chambre de processus (24) pour déplacer le produit dans la chambre de processus, l'air de processus ressortant à nouveau de la chambre de processus (24) par sa zone supérieure, **caractérisé en ce que** l'air de processus, au moins au cours d'une première phase du traitement, après sa sortie de la zone supérieure de la chambre de processus (24), est guidé en un courant continu de type circuit, au moins en partie dans le canal (32) central au récipient, et y est dirigé à nouveau vers le bas, où il est à nouveau introduit dans la chambre de processus (24).

2. Procédé selon la revendication 1, **caractérisé en ce que** le courant de l'air de processus dans la zone inférieure du canal (32) central au récipient est produit au voisinage immédiat de la zone d'embouchure dans la chambre de processus (24), de sorte que dans le canal (32) central au récipient il se forme une pression d'aspiration dirigée vers le bas.

3. Procédé selon la revendication 1 ou 2, **caractérisé en ce que** l'air de processus est introduit dans la chambre de processus (24) avec un moment cinétique centrifuge et tangentiel.

4. Procédé selon l'une des revendications 1 à 3, **caractérisé en ce que** l'air de processus est brassé dans le récipient (14), au cours de la première phase de traitement, en tant que système en circuit sensiblement fermé.

5. Procédé selon l'une des revendications 1 à 4, **caractérisé en ce qu'**au cours d'au moins une deuxième phase de traitement, l'air de processus est amené en outre depuis l'extérieur du récipient (14) dans le canal central au récipient et est introduit dans la zone inférieure de la chambre de processus (24).

6. Procédé selon la revendication 5, **caractérisé en ce qu'**au cours de la deuxième phase de traitement, l'air de processus sortant de la chambre de processus (24) par sa zone supérieure, est évacué au moins en partie vers l'extérieur du récipient (14), sans être recyclé dans la chambre de processus (24), par le canal (32) central au récipient.

7. Procédé selon la revendication 5 ou 6, **caractérisé en ce que** la transition entre la première phase de traitement et la deuxième phase de traitement est exécutée de manière continue.

8. Procédé selon l'une des revendications 5 à 7, **caractérisé en ce que** l'air de processus, amené depuis l'extérieur du récipient (14), est guidé à travers un filtre (86) disposé au-dessus de la chambre de processus (24).

9. Procédé selon l'une des revendications 1 à 8, **caractérisé en ce qu'**au cours de la première phase de traitement, le produit est exposé à un premier milieu humide dans la zone d'embouchure inférieure du canal (32) central au récipient, dans la chambre de processus (24).

10. Procédé selon l'une des revendications 5 à 8 ou 9, si celle-ci se rattache à l'une des revendications 5 à 8, **caractérisé en ce qu'**au cours de la deuxième phase de traitement, le produit est exposé à un deuxième milieu humide à l'intérieur de la chambre de processus (24).

11. Dispositif de traitement d'un produit sous forme de particules, en particulier de mixage, séchage, granulation, pelletisation et/ou enrobage du produit, comportant un récipient (14) qui comporte une chambre de processus (24) réalisée comme chambre annulaire, disposée autour d'un axe médian longitudinal (26) du récipient (14), et comportant un canal (32), central au récipient, séparé de la chambre de processus (24), servant de canal d'écoulement à l'air de processus, lequel débouche dans la zone inférieure de la chambre de processus (24), une zone supérieure de la chambre de processus (24) étant ouverte, **caractérisé en ce que** dans la zone inférieure du canal (32) central au récipient un ventilateur (48) est disposé au voisinage immédiat de la zone d'embouchure dans la chambre de processus (24).

12. Dispositif selon la revendication 11, **caractérisé en ce que** la zone supérieure ouverte de la chambre de processus (24) communique, dans au moins un premier état de fonctionnement, avec le canal (32) central au récipient de manière à guider l'air de processus, par le fait que le canal (32) central au récipient est réalisé de manière à s'élargir périphériquement vers la zone supérieure de la chambre de processus (24) et à s'ouvrir vers la chambre de processus (24).

13. Dispositif selon la revendication 11 ou 12, **caractérisé en ce que** le ventilateur (48) comporte des pales de ventilateur (50) s'étendant sensiblement radialement et verticalement, dont les extrémités radialement extérieures pénètrent, de manière sensiblement adaptée à la forme, au moins en partie dans la zone d'embouchure entre le canal (32) central au récipient et la chambre de processus (24).

14. Dispositif selon la revendication 13, **caractérisé en ce que** les extrémités radialement extérieures des pales de ventilateur (50), vues dans le sens de rotation du ventilateur (48), sont courbées vers l'arrière.

15. Dispositif selon la revendication 13 ou 14, **caractérisé en ce que** les pales de ventilateur (50) s'étendent radialement sur une distance différente.

16. Dispositif selon l'une des revendications 11 à 15, **caractérisé en ce que** le récipient (14) est relié ou peut être relié à un système externe d'amenée d'air de processus, et comporte un canal d'air d'amenée (84) qui communique avec le canal (32) central au récipient.

17. Dispositif selon la revendication 16, **caractérisé en ce qu'**il est prévu une soupape (94) ou une cloison mobile pour relier le canal d'air d'amenée (84) au canal (32) central au récipient, de manière à guider l'air de processus, ou pour fermer celui-ci par rapport au canal d'air d'amenée (84).

18. Dispositif selon la revendication 17, **caractérisé en ce que** dans un état de fonctionnement dans lequel le canal d'air d'amenée (84) est relié au canal (32) central au récipient, de manière à conduire l'air de processus, la soupape (94) ou la cloison mobile ferme, de manière sensiblement étanche à l'air, le canal (32) central au récipient par rapport à la zone supérieure ouverte de la chambre de processus (24).

19. Dispositif selon la revendication 17 ou 18, **caractérisé en ce que** la soupape (94) ou cloison mobile présente au moins une position de fonctionnement dans laquelle le canal d'amenée d'air (84) ainsi que le canal (32) central au récipient sont reliés, de manière à conduire l'air de processus, respectivement au canal (32) central au récipient et à la zone supérieure ouverte de la chambre d'air de processus (24).

20. Dispositif selon l'une des revendications 16 à 19, **caractérisé en ce qu'**au-dessus de la chambre de processus (24) est disposé un filtre (86) qui est monté dans le parcours d'écoulement du canal d'amenée d'air (84).

21. Dispositif selon la revendication 20, **caractérisé en ce que** le canal d'amenée d'air (84) comporte un premier sabot (88) disposé au-dessus du filtre (86) et franchissant un secteur de celui-ci, ainsi qu'un deuxième sabot (90), opposé au premier sabot (88), au-dessous du filtre (86), qui est relié au canal (32) central au récipient, et **en ce que** le premier et le deuxième sabots (90) peuvent être déplacés sur le filtre (86) dans un mouvement de rotation.

22. Dispositif selon l'une des revendications 11 à 21, **caractérisé en ce qu'**il est disposé au moins une première buse de pulvérisation (70, 71) dans la chambre de processus (24), pour pulvériser un premier fluide humide dans la zone de l'embouchure inférieure du canal (32) central au récipient, buse dont la direction de pulvérisation est dirigée sensiblement vers l'intérieur de la chambre de processus (24).

23. Dispositif selon la revendication 22, **caractérisé en ce que** la au moins une buse de pulvérisation (70, 71) est disposée sur le ventilateur (48) et tourne avec celui-ci.

24. Dispositif selon la revendication 23, **caractérisé en ce que** la direction de pulvérisation de la au moins une buse de pulvérisation (70, 71) est orientée sensiblement vers l'arrière, par rapport au sens de rotation du ventilateur (48).

25. Dispositif selon l'une des revendications 11 à 24, **caractérisé en ce qu'**il est prévu au moins une deuxième buse de pulvérisation (78, 79) pour pulvériser un deuxième fluide humide sur le produit, laquelle buse est disposée dans la zone inférieure de la chambre de processus (24), et dont la direction de pulvérisation est orientée sensiblement verticalement, de préférence tangentiellement dans la direction de rotation du ventilateur (48).
